# EUROPEAN PATENT SPECIFICATION

(11) **EP 2 773 596 B1**
(45) Date of publication and mention of the grant of the patent: **15.07.2020**
(21) Application number: 12845624.1
(22) Date of filing: 01.11.2012
(51) Int. Cl.: C03C 27/00, C03C 8/24, C03C 3/00, C03C 8/04, C03C 8/06, C03C 8/10, C03C 8/12, C03C 23/00, C03C 27/04, C04B 37/04, C03C 27/10

(54) **MICROWAVE SEALING OF INORGANIC SUBSTRATES USING LOW MELTING GLASS SYSTEMS**
MIKROWELLENDICHTUNG VON ANORGANISCHEN SUBSTRATEN MIT GLASSYSTEMEN MIT NIEDRIGEM SCHMELZPUNKT
SCELLAGE PAR MICRO-ONDE DE SUBSTRATS INORGANIQUES UTILISANT DES SYSTÈMES DE VERRE À BASSE TEMPÉRATURE DE FUSION

(30) Priority: 02.11.2011 US 201161554518 P
(43) Date of publication of application: 10.09.2014
(73) Proprietor: FERRO CORPORATION, Mayfield Heights, OH 44124 (US)
(72) Inventor: SRIDHARAN, Srinivasan, Strongsville, OH 44136 (US); MALONEY, John, J., Solon, OH 44139 (US); KHADILKAR, Chandrashekhar, S., Broadview Heights, OH 44147 (US); BLONSKI, Robert, P., North Royalton, OH 44133 (US); PRINZBACH, Gregory, R., Brecksville, OH 44141 (US); SAKOSKE, George, E., Independence, OH 44131 (US)
(74) Representative: Gille Hrabal
(86) International application number: PCT/US2012/062901
(87) International publication number: WO 2013/067081

(56) References cited:
- WO-A1-00/37362
- WO-A1-01/55042
- WO-A1-2009/086228
- WO-A1-2011/130632
- US-A1- 2002 035 852
- US-A1- 2005 151 151
- US-A1- 2007 014 949
- US-A1- 2009 101 872
- US-A1- 2009 325 349
- US-B1- 6 555 025

## Description

### BACKGROUND OF THE INVENTION

### 1. Field of Invention

The present invention relates to a frit-based hermetic sealing method for sealing two inorganic substrates; for example glass plates to one another, or sealing glass to ceramics. These hermetic seals are useful in various applications such as (a) encapsulating solar cells based on silicon, organic systems, and thin film, (b) encapsulating other electronic devices such as organic LEDs (OLED), (c) producing Vacuum Insulated Glass (VIG) windows, and (d) architectural windows and automotive glass.

### 2. Description of Related Art

In many practical applications of glass to glass sealing, such as encapsulation of solar cells (crystalline silicon as well as thin films based CdTe and CIGS, polymeric, flexible), OLED packaging, displays, touch screens, vacuum insulated glass (VIG) windows sealing, and architectural and automotive windows sealing, there exists a need to use tempered glasses in many instances. Tempered glasses lose their temper when heated above about 300 °C in conventional furnace firing of sealing glass materials. Therefore, there exists a need to selectively heat the seal material alone and to effect the bonding to the base glasses/substrates without significantly heating the base glasses/substrates.

Accordingly, improvements in the art of selective sealing methods such as microwave sealing are required.

### BRIEF SUMMARY OF THE INVENTION

From the universe of various selective heating techniques such as IR heating, induction heating, microwave heating, laser sealing, and high density plasma arc lamp sealing, microwave heating offers heating rates up to 1000°C/sec (compared to 6 to 10° C/sec slow heating of glass in conventional ovens) coupled with excellent penetration depth at low frequencies such as 0.915GHZ, or generally 0.9 to 2.5 GHz, where industrial/commercial microwave ovens operate. Therefore, microwave heating and sealing can offer unique advantages including selectively heating a thicker layer of seal materials. Since many of these sealing applications - especially vacuum insulated window sealing and solar cells encapsulation or OLED sealing applications - require a thicker seal material (over 20 microns), volumetric heating techniques such as microwave heating becomes a preferred method of sealing.

The invention relates to the use of microwave sealing of inorganic substrates to one another, including glass to glass seals, utilizing both tempered as well as annealed glass substrates.

Scope of the invention is as follows: A method of sealing two inorganic substrates together using a microwave energy source comprising:
a. providing first and second inorganic substrates;
b. applying to at least one of first and second substrates a paste composition including:
   i. a glass frit, and
   ii. a microwave coupling additive,
c. arranging the substrates such that the paste composition lies there between and in contact with both substrates, and
d. subjecting the substrates and paste to microwave radiation, thereby forming a hermetic seal between the two inorganic substrates,
   wherein the said microwave coupling additive is particulate having shape selected from the group consisting of equant, ellipsoidal, tabular, cylindrical, flake, whisker and wire geometries; and
   wherein the microwave coupling additive is selected from the group consisting of ferromagnetic metals, transition metals, iron, cobalt, nickel, gadolinium, dysprosium, MnBi alloy, MnSb alloy, MnAs alloy, CuO●Fe₂O₃, FeO, Fe₂O₃, Fe₃O₄ MgO●Fe₂O₃, MnO●Fe₂O₃, NiO●Fe₂O₃, Y₃Fe₅O₁₂, iron oxide containing glasses, Fe₂O₃-glasses, CrO₂, alkaline earth titanates, rhenium-titanates, rhenium-bismuth titanates, rare earth titanates, and combinations thereof.

In one embodiment of the method according to the current invention the microwave has a frequency of about 0.9 GHz to about 2.5 GHz. In one embodiment the microwave radiation has a frequency of about 0.915 GHz.

In one embodiment of the method according to the current invention the microwave radiation provides a heat flux of 0.1 to 15 kW per square centimeter.

In one embodiment of the method according to the current invention the microwave radiation heats at least a portion of the substrates and paste at a rate of 0.1 to 10,000 °C per second.

In one embodiment of the method according to the current invention the microwave radiation is provided in the form of a circular beam having a diameter of 3 millimeters to 10 centimeters.

In one embodiment of the method according to the current invention the microwave radiation is provided in the form of a beam having a cross section selected from the group consisting of circular, square, elliptical or split.

In one embodiment of the method according to the current invention one of the substrates is glass and the other substrate is ceramic.

In one embodiment of the method according to the current invention an enamel can be prefired to each of top and bottom glass plates, and then a portion of microwave coupling additive containing enamel is applied to at least one of the enamel prefires.

In one embodiment of the method according to the current invention the glass frit is selected from the group consisting of EG2824, EG2824B, EG2824G, EG2760, S46/6; LF256, GL4317, BBS2, EG0026, and combinations thereof; preferably the paste further comprises TiO₂.

In one embodiment of the method according to the current invention the microwave coupling additive is selected from the group consisting of rhenium titanate, rhenium bismuth titanates, and combinations thereof.

One embodiment of the method according to the current invention further comprises adding at least one manganese-containing constituent selected from the group consisting of bismuth manganese pigments, perovskite manganites, Bi₂Mn₄O₁₀, Bi₁₂MnO₂₀ and a bismuth-manganese pigment having a mole ratio of Bi₂O₃ to MnO₂ of 5:1 to 1:5.

One embodiment of the method according to the current invention further comprises adding to the paste at least one Mn(II) additive. This Mn(II) additive is preferably selected from the group consisting of MnO, MnO-containing glasses, Mn(II) pigments, perovskite manganites, and combinations thereof.

One embodiment of the method according to the current invention further comprises interspersing magnetic metallic glass wires in the paste.

In one embodiment of the method according to the current invention the paste further comprises a microwave susceptor material. Preferably, the microwave susceptor material comprises SiC.

In one embodiment of the method according to the current invention the paste further comprises at least one selected from the group consisting of an epoxy and an organic-inorganic hybrid material, and wherein, with the proviso that the first substrate is glass, the second substrate is selected from the group consisting of glass, metal, and ceramic.

In one embodiment of the method according to the current invention the glass frit comprises prior to firing :
a. 25-65 mol% Bi₂O₃,
b. 3-60 mol% ZnO,
c. 4-65 mol% B₂O₃,
d. 0.1-15 mol% of at least one selected from the group consisting of CuO, Fe₂O₃, Co₂O₃, Cr₂O₃, and combinations thereof,
e. no intentionally added oxides of silicon, and
f. no intentionally added oxides of aluminum.

In one embodiment of the method according to the current invention the glass frit composition is selected from the group consisting of glass 1, glass 2 and glass 3, wherein glass 1, glass 2, and glass 3 comprise, respectively,
a. glass 1:
   i. 25-65 mol% Bi₂O₃,
   ii. 3-60 mol% ZnO,
   iii. 4-65 mol% B₂O₃,
   iv. 0.1-15 mol% of at least one selected from the group consisting of CuO, Fe₂O₃, Co₂O₃, Cr₂O₃, and combinations thereof,
   v. no intentionally added oxides of silicon, and
   vi. no intentionally added oxides of aluminum,
b. glass 2:
   i. 37-45 mol% Bi₂O₃,
   ii. 30-40 mol% ZnO,
   iii. 18-35 mol% B₂O₃,
   iv. 0.1-15 mol% of at least one selected from the group consisting of CuO, Fe₂O₃, Co₂O₃, Cr₂O₃,

   i. no intentionally added oxides of silicon, and
   ii. no intentionally added oxides of aluminum, and
c. glass 3:
   i. 5-65 mol% ZnO,
   ii. 10-65 mol% SiO₂,
   iii. 5-55 mol% B₂O₃ + Al₂O₃,
   iv. and at least one selected from the group consisting of:
      a. 0.1-45 mol% of at least one selected from the group consisting of Li₂O, Na₂O, K₂O, Cs₂O, and combinations thereof,
      b. 0.1-20 mol% of at least one selected from the group consisting of MgO, CaO, BaO, SrO and combinations thereof, and
      c. 0.1-40 mol% of at least one selected from the group consisting of TeO₂, Tl₂O, V₂O₅, Ta₂O₅, GeO₂.

In one embodiment of the method according to the current invention the glass frit comprises prior to firing:
a. 5-65 mol% ZnO,
b. 10-65 mol% SiO₂,
c. 5-55 mol% B₂O₃ + Al₂O₃,
d. at least one selected from the group consisting of i, ii, iii:
   i. 0.1-45 mol% of at least one selected from the group consisting of Li₂O, Na₂O, K₂O, Cs₂O, and combinations thereof,
   ii. 0.1-20 mol% of at least one selected from the group consisting of MgO, CaO, BaO, SrO and combinations thereof, and
   iii. 0.1-40 mol% of at least one selected from the group consisting of TeO₂, Tl₂O, V₂O₅, Ta₂O₅, GeO₂ and combinations thereof.

In one embodiment of the method according to the current invention the glass frit comprises prior to firing:
a. 5-55 mol% Li₂O+Na₂O+K₂O,
b. 2-26 mol% TiO₂,
c. 5-75 mol% B₂O₃ + SiO₂,
d. 0.1-30 mol% of at least one selected from the group consisting of V₂O₅, Sb₂O₅, P₂O₅, and combinations thereof,
e. 0.1-20 mol% of at least one selected from the group consisting of MgO, CaO, BaO, SrO, and combinations thereof,
f. 0.1-40 mol% of at least one selected from the group consisting of TeO₂, Tl₂O, Ta₂O₅, GeO₂ and combinations thereof, and
g. 0.1-20 mol% F.

In one embodiment of the method according to the current invention the glass frit is a lead-free and cadmium-free sealing glass composition, comprising, prior to firing, (a) 5-65 mol% ZnO, (b) 10-65 mol% SiO₂, (c) 5-55 mol% B₂O₃ + Al₂O₃, (d) 0.1-45 mol% of at least one selected from the group consisting of Li₂O, Na₂O, K₂O, Cs₂O, and combinations thereof, and/or (e) 0.1-20 mol% of at least one selected from the group consisting of MgO, CaO, BaO, SrO and combinations thereof, and/or (f) 0.1-40 mol% of at least one selected from the group consisting of TeO₂, Tl₂O, V₂O₅, Ta₂O₅, GeO₂ and combinations thereof.

In one embodiment of the method according to the current invention the glass frit is a lead-free and cadmium-free sealing glass composition, comprising, prior to firing, (a) 5-55 mol% Li₂O+Na₂O+K₂O, (b) 2-26 mol% TiO₂, (c) 5-75 mol% B₂O₃ + SiO₂, (d) 0.1-30 mol% of at least one selected from the group consisting of V₂O₅, Sb₂O₅, P₂O₅, and combinations thereof, (e) 0.1-20 mol% of at least one selected from the group consisting of MgO, CaO, BaO, SrO, and combinations thereof, (f) 0.1-40 mol% of at least one selected from the group consisting of TeO₂, Tl₂O, Ta₂O₅, GeO₂ and combinations thereof, and (g) 0.1-20 mol% F.

Suitable microwave coupling additives are microwave dielectrics such as ULF800 (rhenium-titanate frit with density 4.37 g/cc that sinters at 900 °C); C0G620H (rhenium titanate with density of 5.65 g/cc that sinters at 1260 °C); C0G820MW (rhenium-bismuth-titanate with density of 5.68 g/cc that sinters at 1330 °C) from Ferro corporation, and combinations thereof.

Alternately, enamels can be prefired to each of top and bottom glass plates, and then a portion of microwave coupling containing enamel is applied to at least one of the enamel prefires. Then the top and bottom glass plates are sealed together by subjecting the seal through microwave heating. Prefiring eliminates the need to process a large mass of sealing material in a solar cell fabrication facility, and prevents excess heating of the photovoltaic device. For the final sealing fire, contamination from binder burnout is eliminated, as no organic binder is needed. In the aggregate, the sealing method carried out by the procedures outlined herein is faster than conventional methods, largely because the prefiring reduces the mass of frit that must be fired at the moment of seal formation

Although prefiring enamel layers before microwave sealing is beneficial to control bubbles, it is also envisioned, and in fact preferred, that direct sealing without prefiring is possible. Further, the enamel layers may be applied to only one of a pair of substrates to be sealed together. Similarly it is envisioned that sealing materials (enamel layers) can all be applied to the same plate (top or bottom) and selectively sealed to the other plate with or without prefiring the enamel. For the faster manufacturing it is preferred to have the enamels on the bottom plate and apply no enamel to the top plate to achieve maximum irradiated microwave energy to the enamels on the bottom plate where it is desired.

An embodiment of the invention is a multi-cell solar array comprising a plurality of individually hermetically sealed solar cells. In many of the practically useful applications of glass to glass sealing, such as encapsulation of solar cells (crystalline silicon as well as thin films based CdTe &CIGS, polymeric, flexible), OLED packaging, displays, and vacuum insulated windows sealing, and architectural & automotive windows sealing, there exists a need to use tempered glasses in many instances. Glasses lose temper when heated above about 300°C in conventional furnace firing of sealing glass materials. Therefore, there exists a need to selectively heat the seal material alone and to effect the bonding to the base glasses/substrates without significantly heating the base glasses/substrates.

Envisioned herein is the use of products made by microwave heating and melting systems industry leaders such as Gyrotron Technology, Inc. 3412 Progress Drive, Bensalem, PA 19020 (www.gyrotrontech.com) which produces unique microwave heating technology, employing a high frequency concentrated microwave applicator to melt glasses. The Gyrotron Beam is a concentrated source of energy. Its high frequency and high energy concentration combined with the microwave nature of this novel source results in unique properties, different from any other known source of energy. The beam can perform the following functions: rapid volumetric heating of non-metallic materials from 10 microns to 30 cm (.0004" to 12"), meaning heating that is faster than heat conduction and oxidation methods; rapid selective heating, where a target region inside an exposed material can be heated differentially from surrounding regions. The Gyrotron Beam is an efficient heat source for the processing of any kind of polymer based materials, organics, ceramics, semiconductors, glass, wood, and other non-metallic materials.

The Gyrotron Beam is the first microwave source in the form of a beam. It has a heat flux of up to 15 kW / sq. cm, for example 1-15 kW/ sq. cm. It performs rapid heating at normal and low pressure: up to 10,000 °C /second, for example 0.1 to 10,000 °C/ second; provides selective and/or exclusive heating of target region or layer inside or on surfaces without significant heating of other layers. The beam can take any form, for example circular with diameter of 3mm (0.12") or more; a strip with length up to 2m (6 feet), square and ellipse up to 60 sq ft. The beam can also be split to support two production lines or heat two sides of a product being processed simultaneously.

### BRIEF DESCRIPTION OF THE DRAWINGS

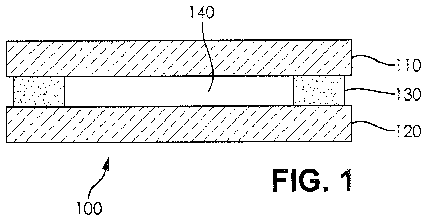

Figure 1 depicts a simple microwave-heated fused seal between two glass plates.

### DETAILED DESCRIPTION OF THE INVENTION

Broadly in selective sealing methods localized heating occurs due either to preferential absorption of electromagnetic waves of interest due to the presence of suitable absorbers, or couplers in the seal materials. This leads to selective heating of seals. Control of various aspects of this selective sealing method such as: amount and location of absorption and heat generation; controlling heat dissipation to minimize the occurrence of thermal gradients or thermal shock - through materials and seal designs, especially for one such selective sealing method - Microwave Sealing - are other aspects of the invention.

The invention involves controlling the amount of microwave energy deposition, the location of the deposition of this energy, and the rate of deposition of this energy, so that a high quality seal is formed, eliminating fractures due to thermal shock and thermal expansion mismatches that would compromise the hermeticity of the seal are prevented or minimized.

The method for forming hermetic seals according to this invention is simple in concept, but quite difficult to achieve in practice. Note that the formation of a hermetic seal requires near perfection since even a single gap or leak in a large solar module or VIG panel, which may be on 0.8m x 1.2 m to 2m x 3m glass substrates, compromises the seal and lifetime of the solar module or loss of insulating power of VIG unit. The sealing glass or enamel can either be preglazed (or prefired) on the glass plates before microwave sealing the glass plates together, or directly sealed without preglazing. It should be appreciated that bubbles present in an enamel or that may form during the sealing operation will expand in size during the heating, forming larger voids that could compromise the integrity of the seal. Therefore depending on the seal geometry and glass plates sizes the enamel layer can either be preglazed or not.

In principle, this invention entails minimizing any dimensional changes, depositing the majority of the energy at the site of the interface to be sealed, controlling and minimizing average bubble sizes and then minimizing any thermal gradients and expansion mismatches to minimize the chance for fractures from thermal shock or thermal expansion mismatch.

The dimensional changes are primarily eliminated by the use of fired (preglazed) enamels that have been densified/sintered from dried depositions having bulk densities of about 60% or less of their theoretical density, to fired enamels with at least 90% of theoretical density. However, it should also be recognized that bonding a substrate having a preglazed enamel to one with a thin layer of dried enamel paste would give only minor dimensional changes and would work nearly as well, and is also part of this invention. Another purpose of the preglazed fired enamels on substrates is to create high-quality enamel-substrate interfaces.

Another embodiment of the invention concerns controlling the location of energy deposition. In microwave sealing electromagnetic fields of high intensity are created by microwave generators such as those from Gyrotron Technology, Inc. In fact the Gyrotron beam is the first microwave source in the form of a beam. This beam can provide rapid volumetric heating of various substrate materials - polymers, organics, ceramics, semiconductors, glass, wood, and other non-metallic materials. It has a heat flux of up to 15kW per sq. cm. The heating rate of at least a portion of the substrates and paste may be 0.1 to 10,000 °C per second. The beam may take any of the following shapes: circular, square, elliptical, or split.

The D₅₀ particle size of the coupling additives used in the method according to the current invention can be in the range of 5 nm to 100,000 nm, preferably 10 nm to 50,000 nm, more preferably 50 nm to 10,000 nm.

Yet another embodiment of the invention relates to preventing stresses that would weaken the seal and preventing fractures that would compromise the hermeticity of the seal. This is done by controlling the composition of the enamel and the parameters of the sealing technique. Although it is not a requirement for the use of this invention, the use of preglazed enamels is extremely helpful for forming high-quality hermetic seals. The use of dried enamels for the sealing step results in significant dimensional changes when the coating has a substantial thickness, making formation of the seal more difficult. In addition, the dried enamels are prone to form large voids in the seal, and also tend to blow some contamination to the inside of the cell module or VIG panel during the sealing method.

Another embodiment of this invention is addition of the aforementioned coupling materials to low temperature seal glass materials disclosed in commonly owned copending PCT/US2011/032689 (U.S. Ser. No. 13/641,046). The aforementioned coupling materials may be added to commercial available materials such as EG2824, EG2824B and EG2824G from Ferro Corporation, Cleveland, OH. The seal glass materials stated here, are not limited to high bismuth glasses alone. We envision incorporation of some of these coupling materials to different seal glass systems, namely high lead glass seal materials based on low melting lead glasses such as EG2760; zinc glass systems such as CF7574, LF256; bismuth zinc borate glasses such as EG2871; high barium glasses; high calcium glasses; alkali silicate glasses containing titanium and/or zinc such as EG3600, EG3608. The above named glasses are commercially available from Ferro Corporation, Cleveland Ohio and are broadly disclosed in the following tables.

**Table 1. Broad ranges for individual oxides to be used in sealing glass frits. The glass frits broadly have softening points of 250 to 800 °C.**

| **Oxide (Mole%)** | 1-1 | 1-2 | 1-3 | 1-4 | 1-5 |
|---|---|---|---|---|---|
| Bi₂O₃ | 25-65 | 30-60 | 32-55 | 35-50 | 37-45 |
| ZnO | 3-60 | 10-50 | 15-45 | 20-40 | 30-40 |
| B₂O₃ | 4-65 | 7-60 | 10-50 | 15-40 | 18-35 |
| SiO₂ & Al₂O₃ | No intentional additions | | | | |
| MgO | No intentional additions | | | | |
| ZrO2 | No intentional additions | | | | |
| CeO₂ | No intentional additions | | | | |
| Refractory oxides | No intentional additions | | | | |
| PbO and CdO | No intentional additions | | | | |

**Table 2. Ranges for individual additional oxides to be used in sealing glass frits in minor amounts.**

| Alternative Oxide Ranges (Mole %) | 2-1 | 2-2 | 2-3 | 2-4 | 2-5 | 2-6 |
|---|---|---|---|---|---|---|
| K₂O | 0-15 | 0.1-10 | 0.5-8 | 1-7 | 1.5-5 | 2-4 |
| Li₂O | 0-15 | 0.1-10 | 1-9.5 | 2-9 | 3-8 | 4-8 |
| La₂O₃ | 0-15 | 0.1-10 | 1-9 | 2.5-7 | 3-6 | 3.5-5 |
| Fe₂O₃ | 0-15 | 0.1-10 | 0.5-8 | 1-7 | 2-6 | 4-5.5 |
| CuO | 0-15 | 0.1-10 | 2-9.5 | 3-9 | 5-8.5 | 6-8.5 |
| Co₂O₃ | 0-15 | 0.1-10 | 2-9.75 | 4-9.5 | 6-9 | 7.5-9 |
| MnO | 0-15 | 0.1-10 | 1.5-9 | 2-8 | 4-7 | 4-7 |
| NiO | 0-15 | 0.1-10 | 1.5-9 | 2-8 | 4-7 | 4-7 |
| (Ta₂O₅+P₂O₅WO₃+MoO₃+SnO) | 0-10 | 0-8 | 0-6 | 0.1-5 | 0.1-4 | 0.1-4 |
| (TeO₂+Tl₂O+V₂O₅+GeO₂) | 0-40 | 0-30 | 0-20 | 0.1-30 | 0-10 | 0.1-15 |
| F₂ | 0-15 | 0-10 | 0-8 | 1-6 | 2-6 | 2-6 |

Alternative ranges for individual additional oxides in Table 2 include, for CuO, Fe₂O₃, Co₂O₃, and MnO, in mol%: 1.5-9, 2-8 and 4-7. Alternate ranges for La₂O₃ include 0.5-8, 2-6 and 1-6 mol%.

Oxides in Tables 2 or 4, including the alternatives in the preceding paragraph, can be used in any amount disclosed in any column together with oxides from Table 1 or 3. Amounts from different columns in Tables 2 or 4 can be used with amounts of oxides from any column in Table 1 or 3.

It is to be noted that part of these glass oxides such as Bi₂O₃, ZnO, CuO, Fe₂O₃, Co₂O₃, MnO, can be included as ceramic oxide additives in the seal materials to obtain the final overall glass compositions envisioned here.

As mentioned previously multiple glasses, preferably glass mixtures of two or three frits can be used to control the overall properties of the seal. If a second glass composition is used, the proportions of the glass compositions can be varied to control the extent of paste interaction with substrates such as silicon, flow and crystallization characteristics of the seal and hence the resultant seal properties. For example, within the glass component, the first and second glass compositions may be present in a weight ratio of about 1:20 to about 20:1, and preferably about 1:5 to about 5:1. The glass component preferably contains no lead or oxides of lead, and no cadmium or oxides of cadmium. However, in certain embodiments where the properties of PbO cannot be duplicated, such embodiments advantageously comprise PbO. Further the second or third glass can be another bismuth glass from Tables 1 & 2, or a zinc glass (Table 3) or alkali titanium silicate glass (Table 4) or a lead glass (Table 5 or 6).

**Table 3. Oxide frit ingredients for zinc based additive glasses in mole percent.**

| Glass Composition | 3-1 | 3-2 | 3-3 |
|---|---|---|---|
| Ingredient [Mole%] | | | |
| ZnO | 5-65 | 7-50 | 10-32 |
| SiO₂ | 10-65 | 20-60 | 22-58 |
| (B₂O₃+Al₂O₃) | 5-55 | 7-35 | 10-25 |
| (Li₂O + Na₂O + K₂O+Cs₂O) | 0-45 | 2-25 | 1-20 |
| (MgO + CaO + BaO + SrO) | 0-20 | 0-15 | 0-10 |
| (TeO₂+Tl₂O+V₂O₅+Ta₂O₅+GeO₂) | 0-40 | 0-30 | 0-15 |

**Table 4. Oxide frit ingredients for alkali-titanium-silicate additive glasses in mole percent.**

| Glass Composition | 4-1 | 4-2 | 4-3 |
|---|---|---|---|
| Ingredient [Mole%] | | | |
| Li₂O + Na₂O + K₂O | 5-55 | 15-50 | 30-40 |
| TiO₂ | 2-26 | 10-26 | 15-22 |
| B₂O₃ + SiO₂ | 5-75 | 25-70 | 30-52 |
| V₂O₅ + Sb₂O₅ + P₂O₅ | 0-30 | 0.25-25 | 5-25 |
| MgO + CaO + BaO + SrO | 0-20 | 0-15 | 0-10 |
| (TeO₂+Tl₂O+Ta₂O₅+GeO₂) | 0-40 | 0-30 | 0-20 |
| F | 0-20 | 0-15 | 5-13 |

**Table 5. Oxide frit ingredients for lead based additive glasses in mole percent.**

| Glass Composition | 5-1 | 5-2 | 5-3 |
|---|---|---|---|
| Ingredient [Mole%] | | | |
| PbO | 15-75 | 25-66 | 50-65 |
| B₂O₃ + SiO₂ | 5-75 | 20-55 | 24-45 |
| ZnO | 0-55 | 0.1-35 | 0.1-25 |
| (Li₂O + Na₂O + K₂O+Cs₂O) | 0-40 | 0-30 | 0-10 |
| TiO₂+ZrO₂ | 0-20 | 0-10 | 0.1-5 |
| (MgO + CaO + BaO + SrO) | 0-20 | 0-15 | 0-10 |
| (TeO₂+Tl₂O+V₂O₅+Ta₂O₅+GeO₂) | 0-40 | 0-30 | 0-15 |
| F₂ | 0-15 | 0-10 | 0-8 |

**Table 6. Oxide frit ingredients for lead vanadium based additive glasses in mole percent.**

| Glass Composition | 6-1 | 6-2 | 6-3 |
|---|---|---|---|
| Ingredient [Mole%] | | | |
| PbO | 1-90 | 10-70 | 20-40 |
| V₂O₅ | 1-90 | 10-70 | 25-65 |
| P₂O₅ | 5-80 | 5-40 | 5-25 |
| B₂O₃ + SiO₂ | 0-20 | 0-10 | 0-5 |
| (Li₂O + Na₂O + K₂O+Cs₂O) | 0-40 | 0-30 | 0-10 |
| (MgO + CaO + BaO + SrO) | 0-20 | 0-15 | 0-10 |
| (TeO₂+Ta₂O₅+ Tl₂O +GeO₂) | 0-40 | 0-30 | 0-15 |
| F₂ | 0-15 | 0-10 | 0-8 |

Sealing glass compositions used in the method of the invention can be lead-free and cadmium free. in one embodiment, the lead-free and cadmium-free sealing glass composition, comprise, prior to firing, (a) 25-65 mol% Bi₂O₃, (b) 3-60 mol% ZnO (c) 4-65 mol% B₂O₃, (d) 0.1-15 mol% of at least one selected from the group consisting of CuO, Fe₂O₃, Co₂O₃, Cr₂O₃, and combinations thereof, (e) no intentionally added oxides of silicon, and (f) no intentionally added oxides of aluminum.

In addition to other embodiments, the glasses used in the invention may be selected from the group consisting of bismuth glass, lead glass, zinc glass, barium glass, calcium glass, alkali silicate glasses, vanadium glass, telluride glass, phosphate glass and combinations thereof.

Yet another embodiment of this invention is adding these coupling materials to epoxies as well organic-inorganic hybrid materials to effect the heating, flowing and bonding of substrates glass to glass, glass to metal, and glass to ceramic sealing.

Yet another embodiment of this invention is at least one of the glass plate is tempered.

Yet another embodiment of this invention is at least one of the glass plate is a pre laminated glass assembly.

Yet another embodiment of this invention is at least one of the glass plate is coated with conductive coatings such as tin oxide (TCO) or indium-tin oxide (ITO) material.

Yet another embodiment of this invention is other enamels or pastes are fired along with the sealing glass or enamel layers of this invention.

Yet another embodiment of this invention is an exact feed through is incorporated on glass plates and is either sealed together with, or separately from, seal enamel firing.

Broadly, a process of induction sealing begins with prefiring an induction coupling containing enamel composition on a top glass plate. Then the top plate is placed over the bottom plate. Then a microwave heating source is targeted to the assembly, to melt the top surface of the energy absorbing/coupling enamel and bond the pieces together.

Alternately, microwave coupling containing enamels are prefired to each of top and bottom glass plates. Then the plates are placed together and subject to heating by a microwave source to complete the seal.

Prefiring eliminates the need to process a large mass of sealing material in a solar cell fabrication facility, and prevents excess heating of the photovoltaic device. For the final sealing fire, contamination from binder burnout is eliminated, as no organic binder is needed. In the aggregate, the sealing method carried out by the procedures outlined herein is faster than conventional methods, largely because the prefiring reduces the mass of frit that must be fired at the moment of seal formation.

Although prefired enamel layers before microwave sealing is preferred, it is also envisioned that direct sealing without prefiring is possible.

Similarly it is envisioned that sealing materials (enamel layers) can all be applied to the same plate (top or bottom) and selectively sealed to the other plate with or without prefiring the enamel.

Various embodiments of the invention may involve various procedures for application of microwave coupling enamel layers. The application procedures may include one or more of screen printing, paste extrusion, ink jet printing, digital application procedures using ink jet or spray deposition, automatic syringe dispensing such as by the use of Nordson robotic dispenser systems, spin coating, dip coating and others.

A sealant material system for use in joining two or more inorganic substrates according to the method of the invention that are used to form a photovoltaic device, said sealant material system comprising one or more glass or ceramic components. The sealant material system may include any glass and/or metal and/or oxide in any combination, disclosed herein.

In any embodiment herein, a vacuum or inert atmosphere may be sealed in a space created by the at least two inorganic substrates together with the sealant material system.

A sealant material system for use in joining two or more inorganic substrates according to the method of the invention contained in a photovoltaic device upon application of a concentrated energy source. The sealant material system may include any glass and/or oxide in any combination, disclosed herein.

In many of the practically useful applications of glass to glass sealing, such as encapsulation of solar cells (crystalline silicon as well as thin films based CdTe &CIGS, polymeric, flexible), OLED packaging, displays, and vacuum insulated windows sealing, and architectural & automotive windows sealing, there exists a need to use tempered glasses in many instances. Soda-lime silica glass substrates lose their temper when heated above about 300°C in conventional furnace firing of sealing glass materials. Therefore, there exists a need to selectively heat the seal material alone and to effect the bonding to the base glasses/substrates without significantly heating the base glasses/substrates.

Envisioned herein is the use of products made by microwave heating and melting systems industry leaders such as Gyrotron Technology, Inc. 3412 Progress Drive, Bensalem, PA 19020 (www.gyrotrontech.com) as they have unique microwave heating technology.

The present invention contemplates three different designs as shown in Figures 1 to 3, for induction sealing of glass plates. In Figure 1 it is a simple seal between two glass plates. In Figure 2 the seal has a metallic interlayer. In Figure 3 the outer metal piece is inductively heated to effect glass to metal seals.

In particular, Figure 1 depicts an embodiment with glass plates **110** and **120** joined by a green inductive sealing glass **130** (seal glass and induction coupling additive) to form assembly **100.** Assembly **100** is subjected to heating which fuses the glass in seal **130** to a solid hermetic seal. Cavity **140** may house an active layer (not shown) or a special atmosphere, such as an inert atmosphere, such as N₂, He, Ar, or a partial vacuum, to a pressure of 500 torr, 400 torr, 300 torr, 200 torr, or even 100 torr, to the hermeticity limit of the sealant material used to seal the glass plates **110** and **120** together.

All ranges herein are presumed to include "about" referring to both the upper and lower limits of such ranges. An entry such as 1-10 % TeO₂+Ta₂O₅+ Tl₂O +GeO₂ means that any or all of the named oxides may be present up to a total of 1-10% of the composition. Details about aspects of the invention can be found in one or more of the following United States Patent Applications, all of which are commonly owned: 10/864,304; 10/988,208; 11/131,919; 11/145,538; 11/384,838; 11/774,632; 11/846,552; 12/097,823; 12/298,956; 12/573,209; 61/324,356; 61/328,258; 61/366,568; and 61/366,578.

## Claims

1. A method of sealing two inorganic substrates together using a microwave energy source comprising:
a. providing first and second inorganic substrates;
b. applying to at least one of first and second substrates a paste composition including:
i. a glass frit, and
ii. a microwave coupling additive,
c. arranging the substrates such that the paste composition lies there between and in contact with both substrates, and
d. subjecting the substrates and paste to microwave radiation, thereby forming a hermetic seal between the two inorganic substrates,
wherein the said microwave coupling additive is particulate having shape selected from the group consisting of equant, ellipsoidal, tabular, cylindrical, flake, whisker and wire geometries; and
wherein the microwave coupling additive is selected from the group consisting of ferromagnetic metals, transition metals, MnBi alloy, MnSb alloy, MnAs alloy, CuO●Fe₂O₃, FeO, Fe₂O₃, Fe₃O₄ MgO●Fe₂O₃, MnO●Fe₂O₃, NiO●Fe₂O₃, Y₃Fe₅O₁₂, iron oxide containing glasses, Fe₂O₃-glasses, CrO₂, alkaline earth titanates, rhenium-titanates, rhenium-bismuth titanates, rare earth titanates, and combinations thereof.

2. The method of claim 1, wherein the microwave radiation has a frequency of about 0.9 GHz to about 2.5 GHz.

3. The method of claim 1, wherein the microwave radiation provides a heat flux of 0.1 to 15 kW per square centimeter.

4. The method of claim 1, wherein the microwave radiation heats at least a portion of the substrates and paste at a rate of 0.1 to 10,000 °C per second.

5. The method of claim 1, wherein one of the substrates is glass and the other substrate is ceramic.

6. The method of claim 1, wherein an enamel can be prefired to each of top and bottom glass plates, and then a portion of microwave coupling additive containing enamel is applied to at least one of the enamel prefires.

7. The method of claim 1, further comprising adding at least one manganese-containing constituent selected from the group consisting of bismuth manganese pigments, perovskite manganites, Bi₂Mn₄O₁₀, Bi₁₂MnO₂₀ and a bismuth-manganese pigment having a mole ratio of Bi₂O₃ to MnO₂ of 5:1 to 1:5.

8. The method of claim 1, further comprising adding to the paste at least one Mn(II) additive.

9. The method of claim 1, further comprising interspersing magnetic metallic glass wires in the paste.

10. The method of claim 1, wherein the paste further comprises a microwave susceptor material.

11. The method of claim 1, wherein the paste further comprises at least one selected from the group consisting of an epoxy and an organic-inorganic hybrid material, and wherein, with the proviso that the first substrate is glass, the second substrate is selected from the group consisting of glass, metal, and ceramic.

12. The method of claim 1, wherein the glass frit comprises prior to firing:
a. 25-65 mol% Bi₂O₃,
b. 3-60 mol% ZnO,
c. 4-65 mol% B₂O₃,
d. 0.1-15 mol% of at least one selected from the group consisting of CuO, Fe₂O₃, Co₂O₃, Cr₂O₃, and combinations thereof,
e. no intentionally added oxides of silicon, and
f. no intentionally added oxides of aluminum.

13. The method of claim 1, wherein the glass frit composition is selected from the group consisting of glass 1, glass 2 and glass 3, wherein glass 1, glass 2, and glass 3 comprise, respectively,
a. glass 1:
i. 25-65 mol% Bi₂O₃,
ii. 3-60 mol% ZnO,
iii. 4-65 mol% B₂O₃,
iv. 0.1-15 mol% of at least one selected from the group consisting of CuO, Fe₂O₃, Co₂O₃, Cr₂O₃, and combinations thereof,
v. no intentionally added oxides of silicon, and
vi. no intentionally added oxides of aluminum,
b. glass 2:
i. 37-45 mol% Bi₂O₃,
ii. 30-40 mol% ZnO,
iii. 18-35 mol% B₂O₃,
iv. 0.1-15 mol% of at least one selected from the group consisting of CuO, Fe₂O₃, Co₂O₃, Cr₂O₃,
i. no intentionally added oxides of silicon, and
ii. no intentionally added oxides of aluminum, and
c. glass 3:
i. 5-65 mol% ZnO,
ii. 10-65 mol% SiO₂,
iii. 5-55 mol% B₂O₃ + Al₂O₃,
iv. and at least one selected from the group consisting of:
a. 0.1-45 mol% of at least one selected from the group consisting of Li₂O, Na₂O, K₂O, Cs₂O, and combinations thereof,
b. 0.1-20 mol% of at least one selected from the group consisting of MgO, CaO, BaO, SrO and combinations thereof, and
c. 0.1-40 mol% of at least one selected from the group consisting of TeO₂, Tl₂O, V₂O₅, Ta₂O₅, GeO₂.

## Patentansprüche

1. Verfahren zum Versiegeln von zwei anorganischen Substraten miteinander unter Verwendung einer Mikrowellenenergiequelle mit den Schritten:
a. Bereitstellen eines ersten und zweiten anorganischen Substrats;
b. Aufbringen auf zumindest entweder das erste oder das zweite Substrat einer Pastenzusammensetzung aufweisend:
I. eine Glasurmasse, und
II. einen Mikrowellenverbindungszusatz,
c. Anordnung der Substrate derart, dass die Pastenzusammensetzung zwischen ihnen und in Kontakt mit beiden Substraten liegt, und
d. Aussetzen der Substrate und der Paste einer Mikrowellenstrahlung, wodurch eine hermetische Versiegelung zwischen den beiden anorganischen Substraten hergestellt wird,
wobei der Mikrowellenverbindungszusatz partikelförmig ausgebildet ist mit einer Form, die ausgewählt ist aus der Gruppe, die equantenförmige, ellipsenförmige, flache, zylindrische, flockenförmige, haarförmige und drahtförmige Geometrien umfasst, und
wobei der Mikrowellenverbindungszusatz ausgewählt ist aus der Gruppe, die aus ferromagnetischen Metallen, Übergangsmetallen, einer MnBi-Legierung, einer MnSb-Legierung, einer MnAs-Legierung, CuO●Fe₂O₃, FeO, Fe₂O₃, Fe₃O₄, MgO●Fe₂O₃, NiO●Fe₂O₃, Y₃Fe₅O₁₂, Gläser enthaltendes Eisenoxid, Fe₂O₃-Gläser, CrO₂, Erdalkali-Titanaten, Rheniumtitanaten, Rhenium-Wismut-Titanaten, seltene Erden-Titanaten und Kombinationen daraus besteht.

2. Verfahren gemäß Anspruch 1, wobei die Mikrowellenstrahlung eine Frequenz von ungefähr 0,9 GHz bis ungefähr 2,5 GHz aufweist.

3. Verfahren gemäß Anspruch 1, wobei die Mikrowellenstrahlung einen Wärmefluss von 0,1 bis 15 kW pro Quadratzentimeter liefert.

4. Verfahren gemäß Anspruch 1, wobei die Mikrowellenstrahlung zumindest einen Bereich der Substrate und der Paste mit einer Geschwindigkeit von 0,1 bis 10.000°C pro Sekunde erwärmt.

5. Verfahren gemäß Anspruch 1, wobei eines der Substrate aus Glas und das andere Substrat aus Keramik besteht.

6. Verfahren gemäß Anspruch 1, wobei eine Emaille jeweils auf der Ober- und Unterseite von Glasplatten vorgebrannt werden kann und dann ein Teil des Mikrowellenverbindungszusatzes, der Emaille enthält, auf zumindest eine der vorgebrannten Emaillen aufgebracht wird.

7. Verfahren gemäß Anspruch 1, ferner aufweisend den Schritt der Zugabe zumindest einer Mangan enthaltenden Komponente, die ausgewählt ist aus der Gruppe, die aus Wismut-Mangan-Pigmenten, Perovskit-Manganaten, Bi₂Mn₄0₁₀, Bi₁₂MnO₂₀ und einem Wismut-Mangan-Pigment mit einem Molverhältnis von Bi₂O₃ zu MnO₂ von 5:1 bis 1:5 besteht.

8. Verfahren gemäß Anspruch 1, ferner aufweisend den Schritt der Zugabe von zumindest einem Mn(II)-Zusatz zu der Paste.

9. Verfahren gemäß Anspruch 1, ferner aufweisend den Schritt des Einstreuens magnetischer metallischer Glasdrähte in die Paste.

10. Verfahren gemäß Anspruch 1, wobei die Paste ferner ein Mikrowellensuszeptormaterial aufweist.

11. Verfahren gemäß Anspruch 1, wobei die Paste ferner zumindest ein Material aufweist, das ausgewählt ist aus der Gruppe, die aus einem Epoxid und einem organisch-anorganischem Hybridmaterial besteht, und wobei mit der Maßgabe, dass das erste Substrat aus Glass besteht, das zweite Substrat ausgewählt ist aus der Gruppe, die aus Glas, Metall und Keramik besteht.

12. Verfahren gemäß Anspruch 1, wobei die Glasurmasse vor dem Brennen aufweist:
a. 25-65 mol% Bi₂O₃,
b. 3-60 mol% ZnO,
c. 4-65 mol% B₂O₃,
d. 0,1-15 mol% zumindest einer Verbindung, die ausgewählt ist aus der Gruppe, die aus CuO, Fe₂O₃, Co₂O₃, Cr₂O₃ und Kombinationen daraus besteht,
e. nicht absichtlich hinzugefügte Oxide von Silizium, und
f. nicht absichtlich hinzugefügte Oxide von Aluminium.

13. Verfahren gemäß Anspruch 1, wobei die Glasurmassenzusammensetzung ausgewählt ist aus der Gruppe, die aus Glas 1, Glas 2 und Glas 3 besteht, wobei Glas 1, Glas 2 und Glas 3 jeweils aufweisen:
a. Glas 1:
i. 25-65 mol% Bi₂O₃,
ii. 3-60 mol% ZnO
iii. 4-65 mol% B₂O₃
iv. 0,1-15 mol% zumindest einer Verbindung, die ausgewählt ist aus der Gruppe, die aus CuO, Fe₂O₃, Co₂O₃, Cr₂O₃ und Kombinationen daraus besteht,
v. nicht absichtlich hinzugefügte Oxide von Silizium, und
vi. nicht absichtlich hinzugefügte Oxide von Aluminium,
b. Glas 2:
i. 37-45 mol% Bi₂O₃,
ii. 30-40 mol% ZnO
iii. 18-35 mol% B₂O₃
iv. 0,1-15 mol% zumindest einer Verbindung, die ausgewählt ist aus der Gruppe, die aus CuO, Fe₂O₃, Co₂O₃, Cr₂O₃ besteht,
v. nicht absichtlich hinzugefügte Oxide von Silizium, und
vi. nicht absichtlich hinzugefügte Oxide von Aluminium,
c. Glas 3:
i. 5-65 mol% ZnO,
ii. 10-65 mol% SiO₂,
iii. 5-55 mol% B₂O₃ + Al₂O₃,
iv. und zumindest eine Verbindung, die ausgewählt ist aus der Gruppe, die besteht aus:
a. 0,1-45 mol% zumindest einer Verbindung, die ausgewählt ist aus der Gruppe, die aus Li₂O, Na₂O, K₂O, Cs₂O und Kombinationen daraus besteht,
b. 0,1-20 mol% zumindest einer Verbindung, die ausgewählt ist aus der Gruppe, die aus MgO, CaO, BaO, SrO und Kombinationen daraus besteht,
c. 0,1-40 mol% zumindest einer Verbindung, die ausgewählt ist aus der Gruppe, die aus TeO₂, Tl₂O, V₂O₅, Ta₂O₅, GeO₂ besteht.

## Revendications

1. Procédé de scellement de deux substrats inorganiques l'un avec l'autre en utilisant une source d'énergie de micro-ondes comprenant les étapes de:
a. fournir un premier et un deuxième substrat inorganique ;
b. appliquer une composition de pâte sur au moins l'un du premier et du deuxième substrat, la composition de pâte comprenant :
i. une fritte de verre, et
ii. un adjuvant de couplage à micro-ondes,
c. disposer les substrats, de sorte que la composition de pâte se trouve entre ceux-ci et en contact avec les deux substrats, et
d. soumettre les substrats et la pâte au rayonnement micro-ondes et ainsi former un joint hermétique entre les deux substrats inorganiques,
dans lequel ledit adjuvant de couplage à micro-ondes est une matière particulaire ayant une forme sélectionnée dans le groupe composé de géométries équantes, ellipsoïdes, tabulaires, cylindriques, en forme de flocons, en forme de poils et de fils ; et
dans lequel l'adjuvant de couplage à micro-ondes est sélectionné dans le groupe composé de métaux ferromagnétiques, de métaux de transition, d'alliage MnBi, d'alliage MnSb, d'alliage MnAs, de CuO●Fe₂O₃, de FeO, de Fe₂O₃, de Fe₃O₄, de MgO●Fe₂C₃, de NiO●Fe₂O₃, de Y₃Fe₅O₁₂, d'oxyde de fer contenant des verres, de verres de Fe₂O₃, de CrO₂, de titanates alcalino-terreux, de titanates de rhénium, de titanates de rhénium-bismuth, de titantes de terres rares et de combinaisons de ceux-ci.

2. Procédé selon la revendication 1, dans lequel le rayonnement micro-ondes a une fréquence d'environ 0,9 GHz à environ 2,5 GHz.

3. Procédé selon la revendication 1, dans lequel le rayonnement micro-ondes fournit un flux de chaleur de 0,1 à 15 kW par centimètre carré.

4. Procédé selon la revendication 1, dans lequel le rayonnement micro-ondes chauffe au moins une partie des substrats et de la pâte à un taux de 0,1 à 10.000°C par seconde.

5. Procédé selon la revendication 1, dans lequel l'un des substrats est fabriqué en verre et l'autre substrat est en céramique.

6. Procédé selon la revendication 1, dans lequel un émail peut être précuit sur chacune d'une face supérieure et d'une face inférieure de plaques en verre et ensuite une portion de l'adjuvant de couplage à micro-ondes contenant de l'émail est appliquée sur au moins une des faces en émail précuit.

7. Procédé selon la revendication 1, comprenant en outre l'étape d'ajouter au moins un composant contenant du manganèse sélectionné dans le groupe composé de pigments bismuth-manganèse, de manganites de perovskite, de Bi₂Mn₄O₁₀, de Bi₁₂MnO₂₀ et d'un pigment bismuth-manganèse ayant un rapport molaire de Bi₂O₃ à MnO₂ de 5 : 1 à 1 : 5.

8. Procédé selon la revendication 1, comprenant en outre l'étape d'ajouter au moins un additif Mn(II) à la pâte.

9. Procédé selon la revendication 1, comprenant en outre l'étape de parsemer des fils de verre métalliques magnétiques dans la pâte.

10. Procédé selon la revendication 1, dans lequel la pâte comprend en outre un matériau suscepteur de micro-ondes.

11. Procédé selon la revendication 1, dans lequel la pâte comprend en outre un matériau sélectionné dans le groupe composé d'un époxy et d'un matériau hybride organique-inorganique, et dans lequel à condition que le premier substrat soit en verre, le deuxième substrat est sélectionné dans le groupe composé de verre, de métal et de céramique.

12. Procédé selon la revendication 1, dans lequel la fritte de verre comprend avant la cuisson :
a. 25-65 % en mol de Bi₂O₃,
b. 3-60 % en mol de ZnO,
c. 4-65 % en mol de B₂O₃,
d. 0,1-15 % en mol d'au moins un composé sélectionné dans le groupe composé de CuO, de Fe₂O₃, de Co₂O₃, de Cr₂O₃ et de combinaisons de ceux-ci,
e. des oxydes de silicium ajoutés non intentionellement, et
f. des oxydes d'aluminium ajoutés non intentionellement.

13. Procédé selon la revendication 1, dans lequel la composition de fritte de verre est sélectionnée dans le groupe composé de verre 1, de verre 2 et de verre3, dans lequel le verre 1, le verre 2 et le verre 3 comprennent chacun :
a. verre 1 :
i. 25-65 % en mol de Bi₂O₃,
ii. 3-60 % en mol de ZnO,
iii. 4-65 % en mol de B₂O₃,
iv. 0,1-15 % en mol d'au moins un composé sélectionné dans le groupe composé de CuO, de Fe₂O₃, de Co₂O₃, de Cr₂O₃ et de combinaisons de ceux-ci,
v. des oxydes de silicium ajoutés non intentionellement, et
vi. des oxydes d'aluminium ajoutés non intentionellement,
b. verre 2 :
i. 37-45 % en mol de Bi₂O₃,
ii. 30-40 % en mol de ZnO,
iii. 18-35 % en mol de B₂O₃,
iv. 0,1-15 % en mol d'au moins un composé sélectionné dans le groupe composé de CuO, de Fe₂O₃, de Co₂O₃, de Cr₂O₃
v. des oxydes de silicium ajoutés non intentionellement, et
vi. des oxydes d'aluminium ajoutés non intentionellement,
c. verre 3 :
i. 5-65 % en mol de ZnO
ii. 10-65 % en mol de SiO₂,
iii. 5-55 % en mol de B₂O₃ + Al₂O₃,
iv. et au moins un composé sélectionné dans le groupe composé de :
a. 0,1-45 % 3n mol d'au moins un composé sélectionné dans le groupe composé de Li₂O, de Na₂O, de K₂O, de Cs₂O et de combinaisons de ceux-ci,
b. 0,1-20 % en mol d'au moins un composé sélectionné dans le groupe composé de MgO, de CaO, de BaO, de SrO et de combinaisons de ceux-ci, et
c. 0,1-40 % en mol d'au moins composé sélectionné dans le groupe composé de TeO₂, de Tl₂O, de V₂O₅, de Ta₂O₅, deGeO₂.
